(19) Europäisches Patentamt
European Patent Office
Office européen des brevets

(11) EP 0 980 852 B1

(12) **EUROPEAN PATENT SPECIFICATION**

(45) Date of publication and mention of the grant of the patent:
**28.04.2004 Bulletin 2004/18**

(21) Application number: **99905266.5**

(22) Date of filing: **22.02.1999**

(51) Int Cl.[7]: **C04B 7/60**, C04B 7/38, C04B 7/36, C04B 7/24

(86) International application number:
**PCT/JP1999/000778**

(87) International publication number:
**WO 1999/044961 (10.09.1999 Gazette 1999/36)**

(54) **CEMENT MANUFACTURING APPARATUS**

VORRICHTUNG ZUR HERSTELLUNG VON ZEMENT

APPAREIL DE FABRICATION DE CIMENT

(84) Designated Contracting States:
**BE CH DE FR GB IT LI**

(30) Priority: **03.03.1998 JP 5081498**

(43) Date of publication of application:
**23.02.2000 Bulletin 2000/08**

(73) Proprietor: **Taiheiyo Cement Corporation
Tokyo 101-0065 (JP)**

(72) Inventors:
- **ANZAI, Tatsuo, Taiheiyo Cement Corp.
Tokyo 101-0065 (JP)**
- **OBANA, Hiroshi, Taiheiyo Cement Corp.
Tokyo 101-0065 (JP)**
- **YAMAMOTO, Yasushi, Taiheiyo Cement Corp.
Sakura-shi, Chiba 285-0802 (JP)**
- **NAKANO, Takashi, Taiheiyo Cement Corp.
Sakura-shi, Chiba 285-0802 (JP)**
- **TUCHIDA, Yoshiaki, Taiheiyo Cement Corp.
Sakura-shi, Chiba 285-0802 (JP)**
- **UWABO, Tomonobu, Taiheiyo Cement Corp.
Koto-ku, Tokyo 135-0024 (JP)**

(74) Representative:
**Winter, Brandl, Fürniss, Hübner, Röss, Kaiser, Polte, Partnerschaft
Patent- und Rechtsanwaltskanzlei
Bavariaring 10
80336 München (DE)**

(56) References cited:
**JP-A- 7 165 446**
**JP-A- 9 118 551**
**JP-A- 9 263 431**
**US-A- 5 365 866**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Technical Field

The present invention relates to an apparatus for the production of cement, and particularly to an apparatus for the production of cement in which wastes are used as a cement raw material.

Background Art

In recent years, general wastes and industrial wastes such as municipal refuses, sludge, and shells markedly increase, and effective utilization and recycling as resources of those wastes are attempted in every field. However, there is no definitive method regarding waste disposal, and it is the existing state to rely on reclamation.

Wastes contain metal pieces, moisture, heavy metals, chlorine, alkalis, and dioxins.

Document D1 (US 5.365.866) describes a method and an apparatus for treating the exhaust gas of a combustion process without a detailed description of blending and grinding the material to be supplied to the kiln.

In document D2 (JP-A-09118551), a raw material A containing incineration ash of waste and an adjustment component material are powdered or granulated and then supplied to a kiln where the linker is burned and cooled.

Disclosure of the Invention

Therefore, the present invention has an object to provide an apparatus for the production of cement capable of making harmful materials contained in wastes harmless, producing cement using wastes as a rawmaterial, thereby recycling the wastes as a resource, and giving cement having a quality comparable to general Portland cement.

The apparatus for the production of cement according to the present invention, in which wastes are used as raw materials, is equipped with a drying pre-treatment unit for removing iron pieces and moisture, a raw material grinding unit for grinding at least one kind of a component modifier such as limestone, alumina, clay and iron raw materials, and at least one kind of wastes (hereinafter, referred to as a raw material), a raw material preparing and blending unit for mixing the raw material in a predetermined proportion, a burning and cooling unit for burning the raw material to form a cement clinker, a product grinding unit for mixing and grinding the clinker and gypsum, and optionally adding a setting modifier, to produce cement, and an exhaust gas treatment unit for quenching an exhaust gas generated from the burning and cooling unit to suppress re-synthesis of dioxins, as well as making the exhaust gas harmless.

Further, the apparatus may be comprised of a chlorine and alkali adjustment unit for adjusting chlorine and alkali contents in the clinker, to thereby adjust the chlorine and alkali contents in the raw material before burning. For example, in the case that an alkali metal content in the raw material and clinker is too large compared to the chlorine content, chlorine sources are added to the raw material, and in the case that the alkali metal content is too small compared to the chlorine content, alkali sources are added to the raw material.

The apparatus may further be comprised of a dioxin decomposition unit for collecting dusts generated from the burning and cooling unit and decomposing dioxins in the dusts under heating. Further, the apparatus may further be comprised of a heavy metal treatment unit for refining heavy metals in the dusts generated from the burning and cooling unit, or may further be comprised of a heavy metal stabilization treatment unit for conducting stabilization treatment of heavy metals in the dusts generated from the burning and cooling unit, and for mixing the same with cement for disposition/disposal.

Brief Description of the Drawing

Fig. 1 is a view illustrating the structure of an apparatus for the production of cement, according to an embodiment of the present invention.

Best Mode for carrying out the Invention

Hereinafter, the embodiment of the present invention is described based on the accompanying drawing.

The structure of the apparatus for the production of cement, according to the embodiment of the present invention, is shown in Fig. 1. The apparatus for the production of cement is mainly comprised of 8 units of a waste drying pre-treatment unit A, a raw material grinding unit B, a raw material preparing and blending unit C, a clinker burning and cooling unit D, a product grinding unit E, an exhaust gas treatment unit F, a dioxin decomposition unit G and a heavy metal refining unit H. The waste herein means at least one kind of incinerated ash of municipal refuses, sludge, shells and the like.

The waste drying pre-treatment unit A has a waste yard 1, a crane 2, a waste drawing hopper 3, a hot air oven 4, a rotary dryer 5, a crusher 6, a magnet separator 7, a magnetic selector 8, a sieve 9, an active carbon addition equipment 10, an acidic gas neutralizer (such as slaked lime or sodium carbonate) addition equipment 11, a bag filter 12, a fan 13, and at least one component adjustment feeder 69.

In this waste drying pre-treatment unit A, the waste is carried by a truck or the like and accumulated on the waste yard 1. The waste is introduced into the waste drawing hopper 3 equipped with a sieve having an opening of 200 mm at the upper portion thereof from the waste yard 1 by the crane 2. After removing iron pieces and the like, the waste is transported to a drying step. In the drying step, bad odor contained in the waste is decomposed by the rotary dryer 5 equipped with the hot air oven 4, and simultaneously moisture contained in the waste is evaporated to decrease the moisture content to 5% or less. Further, after crushing the waste with the crusher 6, iron pieces and the like contained in the waste are removed by the magnet separator 7 or the magnet selector 8, and the waste remained is transported to the raw material grinding unit B. The iron pieces and the like removed by the magnetic separator or the magnetic selector 8 are, after removing adhered dust with the sieve 9, discharged to a pit and then recycled. On the other hand, the dust removed with the sieve 9 is transported to a waste tank 14.

In order to adjust the contents of $SiO_2$, $Fe_2O_3$ and $Al_2O_3$ in the waste components to the target value at an inlet of the rotary dryer 5, at least one kind of component modifiers such as limestone, alumina, clay, and iron raw material is added to the waste from at least one component adjustment feeder 69, if necessary. In the case that drying and pre-treatment are unnecessary, a method of directly introducing into the waste tank 14 may be used. Similarly, the component modifier can directly be introduced into the component modifying tank 15.

Further, active carbon and acidic gas neutralizer are added to the exhaust gas from the rotary dryer 5 by the active carbon addition equipment 10 and the acidic gas neutralizer addition equipment 11 to adsorb dioxin in the exhaust gas on the active carbon, and also to remove acidic gas, such as hydrogen chloride or sulfur oxides, in the exhaust gas by the acidic gas neutralizer. The active carbon and the acidic gas neutralizer which are added to the exhaust gas are recovered with the filter 12, and introduced into the waste crushed with the crusher 6. On the other hand, the exhaust gas that has passed through the bag filter 12 is discharged into atmosphere by the fan 13.

The raw material grinding unit B includes a waste tank 14, a component modifier tank 15, a hot air oven 16, a grinding machine 17, a sieve 18, an active carbon addition equipment 19, an acidic gas neutralizer addition equipment 20, a bag filter 21 and a fan 22. In this raw material grinding unit B, the waste in the waste tank 14 is conveyed to the grinding machine 17 directly or after drying with the hot air oven 16, and active carbon and acidic gas neutralizer are then added from the active carbon addition equipment 19 and the acidic gas neutralizer addition equipment 20. As a result, dioxin is adsorbed onto the active carbon, and also an acidic gas such as hydrogen chloride or sulfur oxide is removed by the acidic gas neutralizer. The waste to which active carbon and acidic gas neutralizer have been added is recovered with the bag filter 21 and is introduced into the waste tank 24. On the other hand, the exhaust gas that has passed though the bag filter 21 is discharged into atmosphere by the fan 22. Similarly, the component modifier is ground with the grinding machine 17, active carbon and acidic gas neutralizer are added thereto from the active carbon addition equipment 19 and the acidic gas neutralizer addition equipment 20, and the component modifier is recovered with the bag filter 21 and introduced into the component modifier tank 23. The exhaust gas that has passed through the bag filter 21 is discharged into atmosphere by the fan 22.

If the waste or the component modifier is powderish and the amount of the particles with a diameter of 88 μm or more is 25% or less, it may not be passed through the grinding machine 17. Further, a bulky product containing iron pieces and the like discharged from the grinding machine 17 is separated with the sieve 18, the sieve-on materials (mainly iron pieces) are recovered in a pit and the sieve-passed materials (mainly raw material dust) are returned to the grinding machine 17.

The raw material preparing and blending unit C includes a component modifier tank 23, a waste tank 24 and a blender 25. In this raw material preparing and blending unit C, the respective raw material is extracted from the component modifier tank 23 and the waste tank 24 so as to obtain the target composition, and the raw materials are blended with the blender 25, followed by investigating the components. If the composition does not have the target value, the raw material corresponding to the deficient amount is replenished to conduct fine adjustment.

The clinker burning and cooling unit D includes a raw material storage tank 26, a chlorine source addition feeder 27 and an alkali source addition feeder 72 as a chlorine and alkali adjustment equipment, a screw conveyer 28, a rotary kiln 29, a clinker cooler 30, a heavy oil tank 31, a heavy oil pump 32, a burner 33, an active carbon addition equipment 54, an acidic gas neutralizer addition equipment 55, a bag filter 56, a fan 71, a cooling fan 66 and a primary air fan 67.

In this clinker burning and cooling unit D, the raw material prepared to the target composition in the blender 25 is conveyed to the raw material storage tank 26 in the burning step, and conveyed, together with the chlorine source discharged from the chlorine source addition feeder 27 or the alkali source discharged from the alkali source addition feeder 72, in a rotary kiln 29 from a kiln inlet hood 70 by a screw conveyer 28. The raw material is heated to a temperature of 1250-1450°C in the rotary kiln 29 to form a clinker, which is cooled in a clinker cooler 30.

Further, since dioxin contained in the raw material is heated to a temperature of 1,250-1,450°C, dioxin is not contained in the clinker.

The alkali and chlorine sources are introduced for the purpose of controlling the chlorine and alkali amount in the clinker. As the chlorine source, chlorine-containing compounds such as calcium chloride, polyvinyl chloride, flon and halons containing chlorine, hydrochloric acid, and chlorine-containing wastes can be used. Further, as the alkali source, alkali metal compounds such as sodium carbonate, glass cullet, soda ash, alkali feldspar, waste alkali solution, and alkali metal-containing waste can be used.

The amount of the chlorine source and the alkali source introduced is adjusted such that the chemical composition of the raw material introduced into the rotary kiln 29 is satisfied with at least one of the following conditions P and Q:

$$P: 0.95 \leqq R/Cl \leqq 2.0$$

$$Q: 0.0 \leqq R\text{-}Cl \leqq 1.2$$

wherein R indicates the content (wt%) of alkali metal atoms in the raw material in terms of $Na_2O$ and Cl indicates the content (wt%) of chlorine atoms in the raw material in terms of $Na_2O$.

Here, when obtaining R, since the content of the alkali metals other than Na and K is generally very small, those can be disregarded. That is, R and Cl can be calculated based on the following equations, wherein the contents (wt%) of $Na_2O$, $K_2O$ and chlorine are represented as ($Na_2O$), ($K_2O$) and (Cl), respectively, the molecular weights of $Na_2O$ and $K_2O$ are $M_N$ and $M_K$, respectively, and the atomic weight of chlorine is represented as $M_C$:

$$R = (Na_2O)+(K_2O)\cdot M_N/M_K$$

$$Cl = (Cl)\cdot M_N / (2M_C)$$

Regarding the raw material introduced into the rotary kiln 29, in the case that the chlorine content is insufficient, the chlorine source is added, and in the case that the alkali content is insufficient, the alkali source is added. Further, the amounts of the chlorine source and the alkali source to be added can be finely adjusted by analyzing the chlorine and alkali contents in the clinker discharged from the clinker cooler 30.

The adjustment of the chlorine and alkali contents by the chlorine source addition feeder 27 and the alkali source addition feeder 72 in the clinker burning and cooling unit D is conducted to efficiently produce alkali metal chlorides such that chlorine and alkali metal are efficiently removed. The alkali metal in the raw material introduced into the rotary kiln 29 is bonded with chlorine during burning in the rotary kiln 29 to form a chloride having high vapor pressure. The chloride formed volatilizes in the exhaust gas during burning by the rotary kiln 29. Accordingly, the chlorine content and the alkali content in the clinker discharged from the rotary kiln 29 can be decreased to very low level as compared with the chlorine content and the alkali content in the raw material introduced into the rotary kiln.

If the chlorine content in the clinker discharged from the rotary kiln 29 exceeds 0.1% by weight, there is the possibility to corrode reinforcing steels in a reinforced concrete. In order to prevent this corrosion, it is preferable that the balance between chlorine and alkali in the raw material introduced into the rotary kiln 29 is finely adjusted within the above-mentioned range of P or Q, so that the chlorine content in the clinker discharged from the rotary kiln is less than 0.1% by weight.

If the alkali metal content in terms of $Na_2O$, in the clinker discharged from the rotary kiln 29 exceeds 1.0% by weight, there is the possibility to become the cause of an alkali-aggregate reaction. In order to prevent this reaction, it is preferable that the balance between chlorine and alkali in the raw material introduced into the rotary kiln 29 is finely adjusted within the above-mentioned range of P or Q, so that the alkali metal content in terms of $Na_2O$ in the clinker discharged from the rotary kiln is less than 1.0% by weight. In the case that the chlorine content in the raw material introduced into the rotary kiln 29 is 3% by weight or more, if the condition P is applied, a large amount of the alkali metal compound remains in the clinker. Therefore, it is preferable that R-Cl is adjusted by applying the condition Q.

Further, regarding the clinker discharged from the rotary kiln 29, in order to adjust the chlorine content to 0.1% or less and the alkali metal content in terms of $Na_2O$, to 1.0% by weight or less, it is preferable that the chlorine content in the rotary kiln raw material is 3% by weight or more, and the balance between chlorine and alkali in the raw material introduced into the rotary kiln 29 is in a range of 1.0-1.4 as R/Cl or in a range of 0.0-0.7 as R-Cl.

The chlorine and alkali components volatilized in the exhaust gas are treated in the exhaust gas treatment unit F. Air for cooling is supplied to the clinker cooler 30 with/through the cooling fan 66 of the clinker cooler 30, a part thereof is supplied to the rotary kiln 29 for burning, and other part thereof is discharged in atmosphere as an exhaust gas with/through a fan 71 after removing dusts with the bag filter 56. Although dioxin, heavy metals, $NO_x$, $SO_x$ and HCl are not contained in this exhaust gas, the active carbon addition equipment 54 and the acidic gas neutralizer addition equipment 55 are provided, assuming that a gas in the kiln reversely flows in the case, for example, that the fan 41 arranged at the rear stage of a denitration equipment 40 in the exhaust gas treatment unit F as mentioned hereinafter gets out of order. In a normal operation, a clinker dust recovered with the bag filter 56 is taken in the clinker tank 57 together with the clinker from the clinker cooler 30. But in an emergency, for example, such that the fan 41 gets out of order, there is the possibility that dioxin or the like is contained in the exhaust gas discharged from the clinker cooler 30. Therefore, active carbon and acidic acid neutralizer are added for treatment to the exhaust gas from the active carbon addition equipment 54 and the acidic acid neutralizer addition equipment 55, and then the dust recovered with the bag filter 56 is supplied to an external heating oven 43 of a dioxin decomposition unit G mentioned hereinafter or the waste yard 1 of the incineration ash drying pre-treatment unit A, and is thermally decomposed or recycled. Further, a heavy oil is transported from the heavy oil tank 31 by the pump 32, is blown into the rotary kiln 29 together with air supplied through a primary air fan 67, and burned by the heavy oil burner 33 with adding a heat-exchanged secondary air in the clinker cooler 30. The raw material is heated to a temperature of 1,250-1,450°C and the raw material is decarboxylated, and then discharged from the rotary kiln 29.

The clinker cooled in the clinker cooler 30 is stored in the clinker tank 57 of the product grinding unit E. This product grinding unit E includes, in addition to the clinker tank 57, a gypsum tank 58, a grinding machine 59, a bag filter 60, a fan 61,a cement tank 62 and a feeder 63. The clinker is drawn out of the clinker tank 57, mixed and ground in the grinding machine 59 together with the gypsum discharged from the gypsum tank 58, and then ground to a predetermined specific surface. Thereafter, if necessary, a setting modifier is added through the feeder 63, and cement is produced.

The exhaust gas treatment unit -F includes a temperature and moisture control equipment 34, a cyclone 35, an active carbon addition equipment 37, an acidic gas neutralizer addition equipment 38, bag filters 36 and 39, a denitration equipment 40, a fan 41, a funnel 42, a cooling fan 53, an aqueous ammonia or urea pouring equipment 64, a pump 65 and a damper 68. In this exhaust gas treatment unit F, an exhaust gas temperature is lowered to 800°C by a kiln inlet hood 70, and the exhaust gas is primarily cooled with air blown by the cooling fan 53, and is secondarily cooled to 300°C or less, preferably 250°C or less, with water in the temperature and moisture control equipment 34 for suppression of re-synthesis of dioxin. Further, after separating course particles with the cyclone 35, the exhaust gas is thirdly cooled to 150-180°C or less, and then enters the bag filter 39 at the second stage after removal of dusts. The course particles separated with the cyclone 35 are again transported to the rotary kiln 29 through the screw conveyer 28.

At an inlet of the bag filter 39 at the second stage, active carbon and acidic gas neutralizer are added, if necessary, from the active carbon addition equipment 37 and the acidic gas neutralizer addition equipment 38 for the purpose of adsorbing HCl and dioxins. The exhaust gas passes through the bag filter 39, separates $NO_x$ with the denitration equipment 40, is sucked with the fan 41, and is released in an atmosphere through the funnel 42. Further, for the purpose of reducing $NO_x$, the aqueous ammonia or urea pouring equipment 64 and the pump 65 are arranged, if necessary. In the case that dioxin is simultaneously removed in the denitration equipment 40, and also in the case that the acidic gas neutralizer such as sodium carbonate does not adversely affect when subjecting the dust to heavy metal refining, the bag filter may be one stage, and each equipment of the active carbon addition equipment 37, the acidic gas neutralizer addition equipment 38 and the bag filter 39 may not be arranged.

The dioxin decomposition unit G is mainly constituted of an external heating oven 43 and a rotary cooler 44. In this dioxin decomposition unit G, the dust recovered with the bag filter 36 at the first stage is conveyed to the dioxin heating decomposition unit constituted of the external heating oven 43 and the rotary cooler 44. After decomposing dioxin by heating at a temperature of 350°C or more and simultaneously removing ammonia, the dust is cooled in the rotary cooler 44, and a slurry thereof is formed in the tank 45, and is conveyed to a heavy metal refining unit H.

The slurry may be formed in the tank 45 by directly introducing in water without the rotary cooler 44. In the heavy metal refining unit H, the dust in the form of a slurry passes through tanks 46 and 47 and is then recovered as a lead product in a filter press 48, and further passes through tanks 49 and 50 and is then recovered as a copper product in a filter press 51, to subject to mine-mouth reduction as a raw material for refining. In the case that decomposition of dioxin is insufficient in the dioxin decomposition unit, dioxins are contained in all the lead product, so that a dioxin heat decomposition unit can further be arranged in a step after recovering the lead product. Alternatively, a unit for decomposing dioxin may be arranged in only a step after recovering the lead product. Waste water flown out of the heavy metal refining unit H is made harmless, and is discharged from a tank 52. The acidic gas neutralizer, chlorine sources, and the active carbon containing dioxin, recovered with the bag filter 39 at the second stage is returned to the waste tank 24.

The exhaust gas from the rotary dryer 5 and the crusher 17 is discharged from the funnel 42 by the fans 13 and 22. Thus, a safety plant is realized, in which cement effectively utilizing the waste is produced, and simultaneously, dioxin is decomposed, heavy metals are subjected to mine-mouth reduction, and harmful materials are not contained in exhaust gas and waste water.

Next, the specific examples in which cement was produced actually using an incineration ash by the production apparatus shown in Fig. 1 is shown below. However, these merely show actual examples, and the present invention is not limited by those examples.

Examples 1-3:

Chemical compositions (%) of incineration ashes 1-3, respectively used in Examples 1-3 are shown in Table 1 below.

Table 1

| | $SiO_2$ | $Al_2O_3$ | $Fe_2O_3$ | CaO | $SO_3$ | $Na_2O$ | $K_2O$ | Cl |
|---|---|---|---|---|---|---|---|---|
| Incineration ash 1 | 33.5 | 17.6 | 4.2 | 20.5 | 1.4 | 4.36 | 2.63 | 4.06 |
| Incineration ash 2 | 24.97 | 13.4 | 5.0 | 27.5 | 1.9 | 3.9 | 2.20 | 6.34 |
| Incineration ash 3 | 25.64 | 16.0 | 8.0 | 23.8 | 2.5 | 2.5 | 1.85 | 5.63 |

Those incineration ashes 1-3 were blended in the proportion (%) as shown in Table 2, and these were mixed with a flash blender for 1 hour to form a prepared raw material. The chemical compositions (%) of these prepared raw materials are shown in Table 3.

Table 2

| | Incineration ash 1 | Incineration ash 2 | Incineration ash 3 | Limestone | Clay | $CaCl_2$ | $NaCO_3$ | R-Cl | R/Cl |
|---|---|---|---|---|---|---|---|---|---|
| Example 1 | 29.2 | | | 67.2 | 1.9 | 1.8 | | 0.1 | 1.1 |
| Example 2 | | 42.9 | | 57.1 | | 0.0 | | 0.1 | 1.0 |
| Example 3 | | | 38.8 | 60.0 | | | 1.2 | 0.2 | 1.1 |

Table 3

| | $SiO_2$ | $Al_2O_3$ | $Fe_2O_3$ | CaO | $SO_3$ | $Na_2O$ | $K_2O$ | Cl |
|---|---|---|---|---|---|---|---|---|
| Example 1 | 12.8 | 5.8 | 1.3 | 42.5 | 0.4 | 1.41 | 0.78 | 2.07 |
| Example 2 | 12.1 | 5.9 | 2.1 | 42.4 | 0.8 | 1.81 | 0.94 | 2.72 |
| Example 3 | 11.5 | 6.6 | 3.1 | 41.5 | 1.0 | 1.69 | 0.72 | 2.20 |

This prepared raw material was burned using a rotary kiln, and the chemical compositions (%) and the mineral compositions (%) of the clinker obtained are shown in Table 4 and Table 5, respectively. In Table 5, C3S indicates $3CaO \cdot SiO_2$; C2S, $2CaO \cdot SiO_2$; C4AF, $4CaO \cdot Al_2O_3 \cdot Fe_2O_3$; and C3S, $3CaO \cdot Al_2O_3$.

Table 4

| | $SiO_2$ | $Al_2O_3$ | $Fe_2O_3$ | CaO | $SO_3$ | $Na_2O$ | $K_2O$ | Cl |
|---|---|---|---|---|---|---|---|---|
| Example 1 | 19.8 | 8.7 | 2.0 | 64.8 | 0.3 | 0.13 | 0.00 | 0.05 |
| Example 2 | 18.2 | 9.0 | 3.2 | 63.0 | 0.6 | 0.21 | 0.01 | 0.08 |
| Example 3 | 18.0 | 10.2 | 4.9 | 64.4 | 1.0 | 0.18 | 0.00 | 0.03 |

Table 5

| | C3S | C2S | C4AF | C3A |
|---|---|---|---|---|
| Example 1 | 52 | 17 | 6 | 20 |
| Example 2 | 53 | 12 | 10 | 19 |
| Example 3 | 50 | 14 | 15 | 19 |

Those clinkers were ground with a vertical type mill, gypsum was added in the weight proportion as shown in Table 6, respectively, to produce cements, and a mortar strength test (JIS R5201-97) was conducted. As Comparative Example, the mortar strength test using a general Portland cement was conducted in the same manner as above. The test results are shown in Table 7 (unit: $N/mm^2$).

Table 6

| | Cement | Dihydrate | Semi-hydrate |
|---|---|---|---|
| Example 1 | 100 | 2.6 | 6.1 |
| Example 2 | 100 | 2.5 | 5.7 |
| Example 3 | 100 | 2.3 | 5.3 |

Table 7

| | 1 day | 3 days | 7 days | 28 days |
|---|---|---|---|---|
| Example 1 | 9.6 | 28.5 | 39.4 | 52.7 |
| Example 2 | 9.2 | 20.4 | 30.6 | 47.5 |
| Example 3 | 11.8 | 25.2 | 36.2 | 52.4 |
| Comparative example | 9.1 | 20.2 | 20.5 | 47.0 |

It is understood from Table 7 that the cement according to the present invention has a strength development ability equal to or more than that of the general Portland cement.

As a result of conducting an elution test of heavy metals from the cements obtained in the above Examples, it passes soil environment standard and city water quality standard as shown in Table 8.

Table 8

| Kind of specimen | Cd | CN | Pb | $Cr^{6+}$ | Hg | Cu | As | Se | Cl |
|---|---|---|---|---|---|---|---|---|---|
| Mortar age 1 day | ND | ND | ND | ND | ND | ND | ND | ND | 40 |
| Mortar age 3 days | ND | ND | ND | ND | ND | ND | ND | ND | 38 |
| Mortar age 7 days | ND | ND | ND | ND | ND | ND | ND | ND | 35 |
| Mortar age 28 days | ND | ND | ND | ND | ND | ND | ND | ND | 34 |
| Reference values of elution amount, etc. | 0.01 1) | ND 1) | 0.01 1) | 0.05 1) | 0.0005 1) | 1 2) | 0.01 1) | 0.01 1) | 200 2) |

Unit: ppm
ND: Not detected because of below the measurement limit
1)"Regarding environmental standards relating soil pollution," Environmental Report No. 46, 1991, appendix table.
2)Based on "Ministerial ordinance for water quality standards," Environmental Report No. 69, 1992

The dust recovered with the bag filter 36 was 5 parts by weight per 100 parts by weight of the clinker, and dioxin could be decomposed to be 0.1 ng/g or less. As a result of heavy metal refining, a lead product was obtained in an amount of 4.7 parts by weight, and a copper product was obtained in an amount of 3.6 parts by weight, per 100 parts by weight of the incineration ash. The analytical results are shown in Table 9.

Table 9

| | Weight ratio | Pb (%) | Zn (%) | Cu (%) | Fe (%) | Cd (ppm) | As (ppm) | Hg (ppm) |
|---|---|---|---|---|---|---|---|---|
| Incineration ash | 100 | 1.53 | 0.08 | 1.91 | 0.01 | 98 | < 1 | 12.2 |
| Lead product | 4.7 | 32.1 | 0.02 | 0.52 | 0.26 | 3 | 2 | 2.66 |
| Copper product | 3.6 | 0.9 | 2.21 | 52.1 | 0.06 | 2730 | < 1 | 2.3 |

Further, dioxin was not detected in the waste water after heavy metal refining, and thus waste water quality standards such as heavy metal were all satisfied. The analytical results of this waste water are shown in Table 10 (unit: mg/l).

Table 10

| | Pb | Cu | Zu | Cd | As | Hg | Se | Dioxin |
|---|---|---|---|---|---|---|---|---|
| Measured value | 0.01 | 0.26 | 0.08 | 0.038 | <0.001 | <0.0005 | 0.002 | 0.00 |
| Reference value | 0.1 | 3 | 5 | 0.1 | 0.1 | 0.005 | 0.1 | - |

Those products are effectively utilized as raw materials for lead refining and copper refining, respectively. However, the dust of which dioxin has been decomposed may be disposed after stabilization treatment of heavy metals. Further, it was confirmed that dioxin was not contained in the clinker. As a result of measurement of trace components in the exhaust gas released from the funnel 42, $NO_x$, $SO_x$, HCl and dioxin were all lower than the emission standard or the guideline as shown in Table 11.

Table 11

| | Nox(ppm) | SOx | HCl | Dioxin | Dust |
|---|---|---|---|---|---|
| Emission concentration from funnel | <80ppm | <10ppm | <20ppm | 0.05ng-TEQ/$m^3$N | <0.001g/$m^3$N |
| Emission standard | 250ppm Waste incinerator | K value and Regulation of total emission | 700mg/ $m^3$N Waste incinerator | 0.1ng-TEQ/$m^3$N | 0.08g/$m^3$N Waste incinerator |

Further, dioxin and trace components such as $NO_x$, $SO_x$ and HCl are not contained in the exhaust gas through the bag filter 56. The heavy metal concentration in the exhaust gas through the bag filter 60 was less than the emission standard as shown in Table 12 (unit: g/$m^3$N).

Table 12

| | Pb | Zn | Cd | T-Cr | T-Hg |
|---|---|---|---|---|---|
| Measured value | <0.004 | <0.004 | <0.004 | <0.004 | <0.0008 |
| Reference value | Zn+Pb<7.5 | | <0.09 | <0.5 | <0.09 |

Further, the contents of dioxin amount, HCl and bad odor in the exhaust gas discharged through the bag filters 12 and 21 were all lower than the emission standard as shown in Table 13.

Table 13

| | Found value | Emission standard |
|---|---|---|
| Dioxin | <0.001ng/$m^3$N | <0.1ng/$m^3$N |
| HCl | 0 ppm | <700mg/$m^3$N |

Table 13 (continued)

| | Found value | Emission standard |
|---|---|---|
| | Hereinafter, unit (ppm) | |
| Ammonia | N.D | 1 |
| Methyl mercaptan | N.D | 0.002 |
| Hydrogen sulfide | N.D | 0.02 |
| Methyl sulfide | N.D | 0.01 |
| Methyl disulfide | N.D | 0.009 |
| Trimethylamine | N.D | 0.005 |
| Acetaldehyde | N.D | 0.05 |
| Propionaldehyde | N.D | 0.05 |
| n-Butyl aldehyde | N.D | 0.009 |
| iso-Butyl aldehyde | N.D | 0.02 |
| n-Valeraldehyde | N.D | 0.009 |
| iso-Valeraldehyde | N.D | 0.003 |
| iso-Butanol | N.D | 0.9 |
| Ethyl acetate | N.D | 3 |
| Methyl isobutyl ketone | N.D | 1 |
| Toluene | N.D | 10 |
| Styrene | N.D | 0.4 |
| Xylene | N.D | 1 |
| Propionic acid | N.D | 0.03 |
| n-Lactic acid | N.D | 0.001 |
| n-Valeric acid | N.D | 0.0009 |
| iso-Valeric acid | N.D | 0.001 |

As explained above, according to the present invention, cement can be produced using, as raw materials, wastes which have conventionally been disposed of with large expenses, and can effectively be utilized as construction materials. Harmful materials contained in those wastes are made harmless in the cement producing step.

Further, various kinds of cements can be produced by adjusting chlorine and alkali contents in the blended raw material, and for example, even if chlorine-containing wastes such as incineration ash of municipal refuses are used as the raw material, cement can be produced having reduced chlorine content, that does not cause corrosion of reinforcing steels etc.

## Claims

**1.** An apparatus for the production of cement using as a raw material at least one of wastes such as incineration ash of municipal refuses, sludge, and shells, said apparatus comprising:

a waste drying pre-treatment unit (A) for removing iron pieces and moisture in the wastes;
a raw material grinding unit (B) for grinding the wastes and a component modifier;
a raw material preparing and blending unit (C) for blending the raw material containing an incineration ash and a component modifier to obtain a target composition;
a clinker burning and cooling unit (D) for burning the raw material to form a cement clinker;
a product grinding unit (E) for mixing and grinding the clinker and gypsum, and optionally adding a setting modifier to produce cement; and

an exhaust gas treatment unit (F) for quenching the exhaust gas generated from the above clinker burning and cooling unit to suppress re-synthesis of dioxins as well as making the exhaust gas harmless.

**2.** An apparatus for the production of cement as claimed in claim 1, further comprising a chlorine and alkali contents adjustment unit for adjusting the raw material before burning so that a content R (wt%) of alkali metal atoms in terms of $Na_2O$ and a content Cl (wt% ) of chlorine atoms in terms of $Na_2O$, are satisfied with at least one of the following conditions:

Condition P: $0.95 \leq R/Cl \leq 2.0$

Condition Q: $0.0 \leq R\text{-}Cl \leq 1.2$

**3.** An apparatus for the production of cement as claimed in claim 2, wherein the chlorine and alkali amount adjustment unit adds chlorine sources to the raw material in the case that an alkali metal content is too large compared to the chlorine content, and adds alkali sources to the raw material in the case that the alkali metal content is too small compared to the chlorine content.

**4.** An apparatus for the production of cement as claimed in claim 1, further comprising a dioxin decomposition unit for collecting dust generated from the above clinker burning and cooling unit, and for decomposing dioxins in the dust under heating.

**5.** An apparatus for the production of cement as claimed in claim 1, further comprising a heavy metal treatment unit for refining heavy metals in the dust generated from the above clinker burning and cooling unit.

**6.** An apparatus for the production of cement as claimed in claim 1, further comprising a heavy metal stabilization treatment unit for conducting a stabilization treatment of heavy metals in the dust generated from the clinker burning and cooling unit, and for mixing the same with cement to dispose the mixture.

**Patentansprüche**

**1.** Eine Vorrichtung zur Herstellung von Zement unter Verwendung von zumindest einem der Abprodukte wie beispielsweise Verbrennungsasche von städtischen Abfällen, Schlamm und Stückkalk als ein Rohmaterial, wobei die Vorrichtung aufweist:

eine Abprodukttrocknungs-Vorbehandlungseinheit (A) zum Entfernen von Eisenstücken und Feuchtigkeit in den Abprodukten,
eine Rohmaterialmahleinheit (B) zum Mahlen der Abprodukte und eines Komponentenmodifikators,
eine Rohmaterialvorrichte- und -Misch-Einheit (C) zum Mischen des Rohmaterials, das eine Verbrennungsasche und
einen Komponentenmodifikator aufweist, um eine Sollzusammensetzung zu erreichen,
eine Klinkerbrenn- und -Kühl-Einheit (D) zum Brennen des Rohmaterials, damit ein Zementklinker ausgebildet wird,
eine Produktmahleinheit (E) zum Mischen und Mahlen von Klinker und Gips und zum optionalen Hinzufügen eines Abbindemodifikators zum Erzeugen von Zement, und
eine Abgasbehandlungseinheit (F) zum Quenchen des Abgases, das von der vorstehenden Klinker-Brenn- und - Kühleinheit erzeugt wurde, um die erneute Synthese von Dioxinen zu unterdrücken und das Abgas unschädlich zu gestalten.

**2.** Eine Vorrichtung zur Erzeugung von Zement nach Anspruch 1, die ferner eine Chlor- und Alkali-Gehalt-Einstelleinheit zum Einstellen des Rohmaterials vor dem Brennen in einer solchen Weise, dass ein Gehalt R (Gewichts-%) der Alkalimetallatome bezüglich $Na_2O$ und ein Gehalt von Cl (Gewichts-%) von Chloratomen bezüglich $Na_2O$ zumindest eine der nachfolgenden Bedingungen erfüllt: Bedingung P: $0{,}95 \leq R/Cl \leq 2{,}0$ Bedingung Q: $0{,}0 \leq R\text{-}CL$ $\leq 1{,}2$,
aufweist.

**3.** Eine Vorrichtung zur Herstellung von Zement nach Anspruch 2, wobei die Chlor- und Akali-Mengen-Einstelleinheit Chlorquellen zum Rohmaterial in dem Fall hinzugibt, in dem ein Alkalimetall-Gehalt im Vergleich zum Chlorgehalt zu groß ist, und Alkaliquellen zum Rohmaterial in dem Fall hinzugibt, in dem der Alkalimetallgehalt in Vergleich zum Chlorgehalt zu klein ist.

**4.** Eine Vorrichtung zur Herstellung von Zement nach Anspruch 1, die ferner eine Dioxin-Zersetzungseinheit zum Sammeln von Staub, der von der vorstehenden Klinker-Brenn- und -Kühleinheit erzeugt wurde, und zum Zersetzen von Dioxinen im Staub bei Erwärmung aufweist.

**5.** Eine Vorrichtung zur Herstellung von Zement nach Anspruch 1, die ferner eine Schwermetallbehandlungseinheit zum Raffinieren von Schwermetallen im Staub, der durch die vorstehende Klinker-Brenn- und -Kühleinheit erzeugt wurde, aufweist.

**6.** Eine Vorrichtung zur Herstellung von Zement nach Anspruch 1, die ferner eine Schwermetall-Stabilisier-Behandlungseinheit zum Durchführen einer Stabilisier-Behandlung von Schwermetallen im Staub, der von der Klinker-Brenn- und Kühl-Einheit erzeugt wurde, und zum Mischen vom Erwähnten mit Zement zum Beseitigen des Gemischs aufweist.

## Revendications

**1.** Appareil pour la fabrication de ciment utilisant comme matière première au moins un des déchets tel que les cendres d'incinération des ordures ménagères, la boue et les coquillages, ledit appareil comprenant :

une installation de pré-traitement et de séchage des déchets (A) pour éliminer les morceaux de fer et l'humidité dans les déchets ;
une installation de broyage de la matière première (B) pour broyer les déchets et un modificateur de composant ;
une installation de préparation et de mélange de la matière première (C) pour mélanger la matière première contenant une cendre d'incinération et un modificateur de composant pour obtenir une composition cible ;
une installation de brûlage et de refroidissement des scories (D) pour brûler la matière première pour former une scorie de ciment ;
une installation de broyage du produit (E) pour mélanger et broyer les scories et du gypse, et éventuellement pour ajouter un modificateur durcissant pour fabriquer du ciment ; et
une installation de traitement des gaz d'échappement (F) pour refroidir rapidement le gaz d'échappement généré par l'installation de brûlage et de refroidissement des scories ci-dessus pour supprimer la re-synthèse de dioxines ainsi que pour rendre les gaz d'échappement inoffensifs.

**2.** Appareil pour la fabrication de ciment selon la revendication 1, comprenant en outre une unité d'ajustement des teneurs en chlore et en métaux alcalins pour ajuster la matière première 'avant le brûlage, de sorte que la teneur R (% en poids) en atomes de métaux alcalins en termes de $Na_2O$ et la teneur Cl (% en poids) en atomes de chlore en termes de $Na_2O$ satisfassent au moins une des conditions suivantes :

$$\text{Condition P : } 0{,}95 \leq R / Cl \leq 2{,}0 \text{ ;}$$

$$\text{Condition Q : } 0{,}0 \leq R - Cl \leq 1{,}2.$$

**3.** Appareil pour la fabrication de ciment selon la revendication 2, dans lequel l'unité d'ajustement de la quantité de chlore et de métal alcalin ajoute des sources de chlore à la matière première dans le cas où la teneur en métal alcalin est trop grande par rapport à la teneur en chlore, et ajoute des sources de métal alcalin à la matière première dans le cas où la teneur en métal alcalin est trop faible par rapport à la teneur en chlore.

**4.** Appareil pour la fabrication de ciment selon la revendication 1, comprenant en outre une installation de décomposition de la dioxine pour collecter la poussière générée par l'unité de brûlage et de refroidissement des scories ci-dessus, et pour décomposer sans chauffage les dioxines dans la poussière.

**5.** Appareil pour la fabrication de ciment selon la revendication 1, comprenant en outre une unité de traitement des métaux lourds pour raffiner les métaux lourds dans la poussière générée par l'unité de brûlage et de refroidissement des scories ci-dessus.

**6.** Appareil pour la fabrication de ciment selon la revendication 1, comprenant en outre une unité de traitement de stabilisation des métaux lourds pour effectuer un traitement de stabilisation des métaux lourds dans la poussière générée par l'unité de brûlage et de refroidissement des scories et pour mélanger ceux-ci au ciment pour rejeter le mélange.

FIG. 1

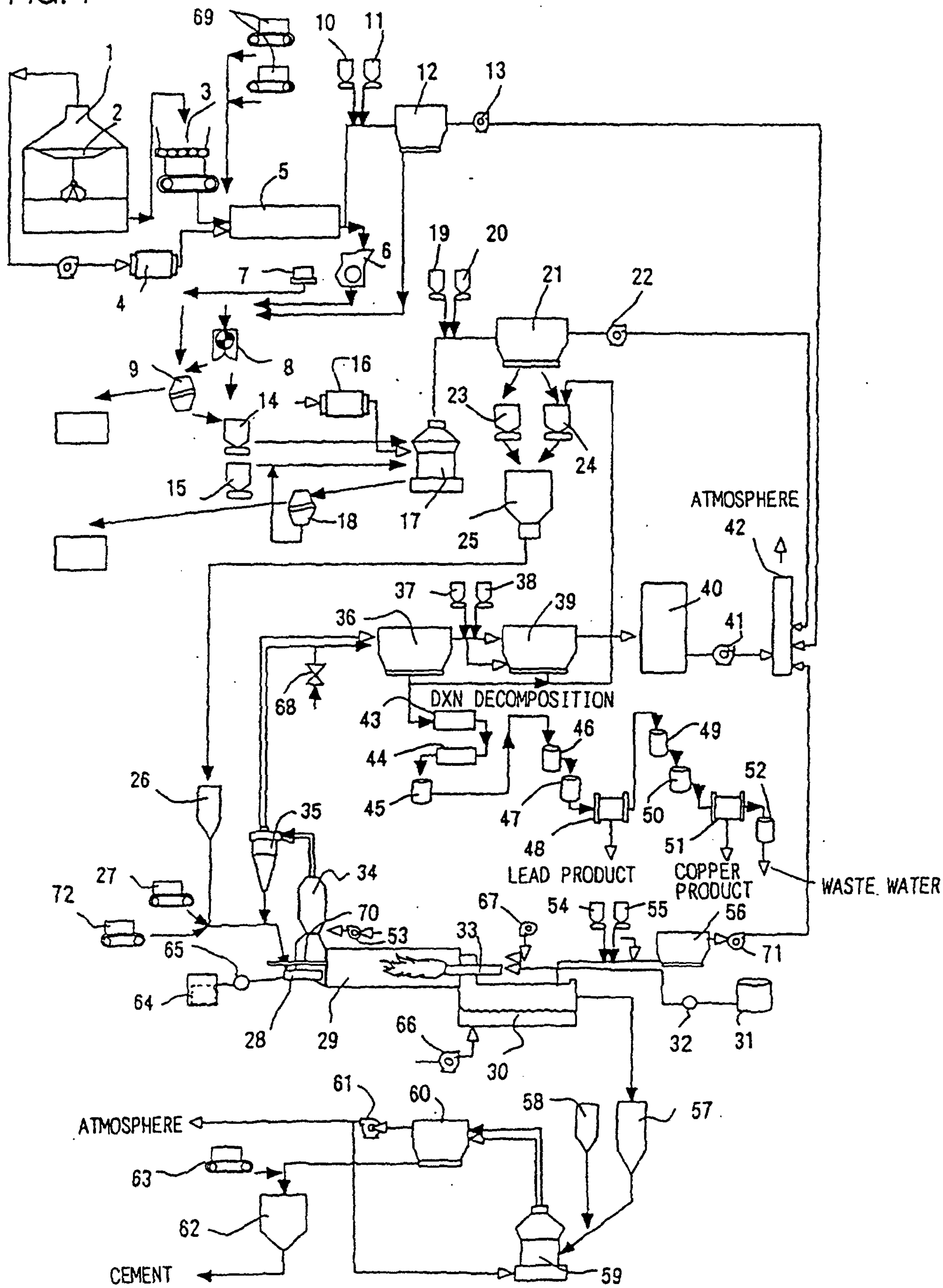

DXN DECOMPOSITION
ATMOSPHERE
LEAD PRODUCT
COPPER PRODUCT
WASTE WATER
ATMOSPHERE
CEMENT